# EUROPEAN PATENT APPLICATION

(11) **EP 2 192 264 A1**
(43) Date of publication of application: **02.06.2010**
(21) Application number: 08170211.0
(22) Date of filing: 28.11.2008
(51) Int. Cl.: E21B 41/00, B29D 28/00

(54) **Net with bands of composite material**

(71) Applicant: Roblon A/s, 9900 Frederikshavn (DK)
(72) Inventor: Kirkegaard, Kim S., 9000, Aalborg (DK); Torp, Lars, 9510, Arden (DK); Godballe, Morten Andersen, 9000, Aalborg (DK); Sørensen, Arne H., 9900, Frederikshavn (DK); Larsen, Keld Porsmose, 9900, Frederikshavn (DK)
(74) Representative: Plougmann & Vingtoft A/S

(57) **Abstract**

The present invention relates to a net (1) comprising first bands (2) mutually spaced apart and second bands (3) mutually spaced apart, the first and second bands (2,3) being interconnected in a number of intersection points. The first and second bands (2,3) are composite materials comprising fibrous strands (4) and a polymer coating (5) at least partly covering the strands (4), the polymer coating (5) forming a single enclosure of all the strands (4). The invention further relates to a system for at least partly enclosing a space, the system comprising at least one net (1) as described above. The net (1) constitutes one structural member of the system forming an enclosure of the space, and the net (1) is fastened to another structural member of the system so that the enclosure is formed from the other structural member and along the net (1). The invention further relates to a method for manufacturing such a net (1) or such a system and for use of such a system as falling object enclosure of a space.

## Description

### FIELD OF THE INVENTION

The present invention relates to nets comprising first and second bands being interconnected in a number of intersection points. The invention further relates to a method of manufacturing such nets and to use of such nets as falling object guides, especially on oil or gas rigs.

### BACKGROUND OF THE INVENTION

In a large number of applications it is necessary to protect equipment and people from falling objects. This is e.g. the case during maintenance and in drilling operations at oil or gas rigs where specially designed falling object guides (FOGs) are used to ensure that heavy equipment, such as a vertically arranged pipe being installed or replaced, does not damage parts of the production lines if it accidentally falls down during handling. Use of such FOGs makes it possible e.g. to perform maintenance without shutting off the wells and bleeding off the pressure in the nearby lines. Such falling object guides are typically large cylindrical steel cages being placed around the working area. However, they are both heavy and large and they are therefore difficult both to handle and to store when not in use.

Hence, an improved FOG would be advantageous, and in particular a FOG which is easier to handle and/or to store would be advantageous.

Another technical field related to protection against divagating objects is crash barriers, such as traffic dividers. This field resembles FOGs as described above except that the objects are vehicles moving in a substantially horizontal direction.

### OBJECT OF THE INVENTION

It is in general an object of the present invention to provide a structure which is easy to handle and/or to store but which at the same time has a high structural strength.

It is specifically an object of embodiments of the present invention to provide a structure which can be used to protect equipment or people against falling objects.

It is a further object of embodiments of the present invention to provide such a protective structure which is easier to handle than what is known from prior art.

It is a further object of embodiments of the present invention to provide a protective structure which is easy to assemble and disassemble during use.

It is a further object of embodiments of the present invention to provide a falling object guide which takes up less storage space than what is known from prior art.

It is a further object of embodiments of the present invention that vision systems as well as fire fighting systems can be operational due to the apertures in the net structure.

It is a further object of embodiments of the present invention to provide a falling object guide weighing less than a known falling object guide for a similar purpose.

It is a further object of the present invention to provide an alternative to the prior art.

### SUMMARY OF THE INVENTION

Thus, the above described objects and several other objects are intended to be obtained in a first aspect of the invention by providing a net comprising first bands mutually spaced apart and second bands mutually spaced apart, the first and second bands being interconnected in a number of intersection points, wherein the first and second bands are composite materials comprising fibrous strands and a polymer coating at least partly covering the strands, said polymer coating forming a single enclosure of all the strands.

By "strand" is preferably meant a number of fibres which are typically joined by twisting. A number of strands may furthermore be twisted together to form a rope.

The first and second bands may all be identical. Alternatively all first bands may be identical but differ from the second bands which are all identical. Still another alternative is that there may be differences between the first bands and between the second bands. The differences may e.g. be with respect to material, size and shape.

In preferred embodiments the strands may be made from fibres having a larger tensile strength and a lower density than steel, such as aramide or carbon fibres. The polymer coating may be made from any material which can be applied by extrusion, such as PE, TPU or PUR.

At least the first bands may have a cross section with a width and a thickness, where the width may be at least twice the thickness, preferably the width being at least five times the thickness. At least the first bands may comprise at least two ropes of fibrous strands arranged across the cross section.

The choice of materials for a given application depends on the expected load during use. Typically only two types of materials are used, one for the strands and one for the polymer coating, but it is also possible within the scope of the invention e.g. to use more than one type of fibre material and to use two layers of polymer coating. The latter may be used to obtain a good bonding to the fibre material as well as specific outer properties not being available in a polymer which also forms a good bonding with the fibres. Typical design parameters include material types, number and size of strands or ropes, type of strand and/or rope twisting, and thickness of polymer coating. The strands or ropes are typically arranged equidistant across the width of the bands, but they may also be unevenly distributed. Furthermore any practically possible cross section is covered by the scope of the invention including circular, elliptical, and rectangular.

The first and second bands may be interconnected by any welding method suitable for a given material, such as ultrasonic welding, laser welding, heat welding or frictional welding, whereby the polymer coatings of interconnecting bands are joined. Alternatively the bands may be mechanically connected, e.g. by use of screws or clamps or by sewing.

Alternatively or in combination therewith, the first and second bands may be interconnected by connecting members being fastened to at least some of the bands. Such connection members are typically designed for a given application and may be used to obtain a stronger connection than what is possible with welding alone.

In some embodiments of the invention, each connecting member may comprise a first and a second connecting member part, each first part being pre-attached to one of the first bands and each second part being pre-attached to one of the second bands, so that the first bands and the second bands are interconnected when the first and second connection member parts are joined. The first and second connecting members may e.g. be joined by spring locks which can be manually assembled. Such spring locks may furthermore be releaseably joined if desired. Alternative joining methods include by screws, rivets.

In some embodiments the connecting members are manufactured separately and attached to the bands prior to the assembly of the bands. They can e.g. be fastened to the bands e.g. by gluing or welding.

The connecting members may be made from a plastic material and fastened to the bands directly by injection moulding. Such a fastening method is known in the art. The material used for the connecting members must be chosen to fulfil all expected use conditions and also so that a sufficiently strong fastening to the polymer coating of the bands is ensured. Possible materials for the connecting members include PE, PA, TPU, ABS and PP.

A common feature of the embodiments described above can be seen as the bands comprising a polymer coating through which the bands are interconnected to form a net. The connection may either be established directly from polymer coating to polymer coating or via the connection members which are preferably made from a plastic material. In all these examples nets are obtained wherein the bands are joined via a polymeric material.

A net as described above preferably forms a plane structure when unfolded. Hereby it is easier to fold the net to take up as little storage space as necessary. The first and second bands may intersect at substantially right angles in the plane structure, but other angles are also possible dependent on an expected load situation during use.

In preferred embodiments, at least some of the bands may have an eye at least at one end, the eye being established by folding a free end of a band and fastening the free end to a region of the remainder of the band. The eyes are preferably adapted to receive fastening means for fastening the net to another structural member. However other means for fastening are also possible. E.g. separately made eyes, hooks or the like may be fastened to the bands by screw connections or welding.

A second aspect of the invention relates to a system for at least partly enclosing a space, the system comprising at least one net as described above. The net may preferably constitute one structural member of the system forming an enclosure of the space, and said net may preferably be fastened to another structural member of the system so that the enclosure is formed from the other structural member and along the net.

In such a system the net may be suspended from the other structural member of the system so that, when in use, the enclosure is formed below the other structural member and downwards along the net.

The system may be an elongate structure open at two ends, wherein the sides of the structure are formed by the net, and wherein the net forms boundaries for items situated in the enclosure during use. The system may be attached to one or several independent connection systems depending on its application. Such connections may be to other points of the structure than at the ends.

The other structural member of the system may be a frame provided at a location at least at one end of the net to which frame the net is fastened. In some embodiments the system may comprise a frame at both ends so that the system forms a self-supported structure which can be moved around. A larger stability during use may be obtained by fastening e.g. the frames to other solid structural members, such as columns of an oil or gas rig. In embodiments having a frame at both ends, the frames may be identical or differ. E.g. a lower frame may comprise feet for improving the stability.

In preferred embodiments, a frame may comprise at least one collapsible first frame part and at least one non-collapsible second frame part, the two parts being connectable to form a rigid frame, said rigid frame being formed by locking the at least one collapsible first frame part into a non-collapsible state. If the net is fastened to the collapsible part, the two-piece construction of the frame gives a system which can be folded up to save storage space. The main function of the non-collapsible part is to ensure a rigid and stable frame during use. The general shape of the frame may be rectangular, circular triangular or polygonal depending on the actual application.

A system as described above may comprise an upper rectangular frame, a lower rectangular frame, and four substantially plane nets being suspended from each side of the upper rectangular frame. The four nets may be joined to neighbouring nets at corners of the system by means of longitudinal side edges of the plane nets being fastened to corner ropes, said corner ropes being fastened to the frames and extending between the frames. Hereby the nets can be arranged in a configuration with sharper corners than what would be possible if only one net was used.

A third aspect of the invention relates to a method of manufacturing a net, the method comprising the steps of providing first bands and second bands of composite material comprising fibrous strands and a polymer coating at least partly covering the strands, attaching connecting members to at least some of the bands at predefined locations along the bands, and interconnecting the first and second bands via the connecting members.

The connecting members may comprise first connecting member parts attached to the first bands and second connecting member parts attached to the second bands, and the interconnecting step may comprise joining mating first and second connecting member parts. Hereby the assembly of the net can be done in a fast and efficient manner.

The method may further comprise the step of forming an eye at, at least one end of at least some of the bands, the eye being formed by folding a free end of the band and fastening the free end to a region of the remainder of the band.

The method may further comprise joining the first and second bands at the intersection points by suitable welding method, such as ultrasonic welding. Hereby the strength of the connection can be increased and thereby the risk of undesired displacement can be lowered compared to a net assembled without welding.

A fourth aspect of the invention relates to a method of manufacturing a system as described above, the method comprising the steps of
- providing four nets by a method as described above,
- providing an upper and a lower rigid frame each comprising a collapsible first frame part and a non-collapsible second frame part,
- connecting the nets at the corners to form an enclosure by passing corner ropes through eyes of adjacent nets, and
- fastening the corner ropes to a frame at each end of the ropes.

A fifth aspect of the invention relates to the use of a system as described above as falling object enclosure of a space. Such use may e.g. be as falling object guide on oil or gas rigs.

A system as described above, e.g. used as a FOG, may alternatively be made by use of other types of nets than those described above. The bands in such nets may e.g. be made from strong tapes comprising fibres but without a polymer coating as described above. Such nets may be joined at the interconnection points e.g. by sewing or riveting alone or in combination with connecting members as described above.

The first, second, third, fourth and fifth aspect of the present invention may each be combined with any of the other aspects. These and other aspects of the invention will be apparent from and elucidated with reference to the embodiments described hereinafter.

### BRIEF DESCRIPTION OF THE FIGURES

The net according to the invention and its use as a falling object guide will now be described in more detail with regard to the accompanying figures. The figures show one way of implementing the present invention and is not to be construed as being limiting to other possible embodiments falling within the scope of the attached claim set.

Figure 1 shows schematically an embodiment of a net according to the present invention in which the first and second bands intersect at right angles.

Figure 2 shows schematically a cross section of a possible composite band used for making a net according to the present invention.

Figure 3 shows schematically a connecting member used to connect the first and second bands of the net in figure 1. The connecting member is moulded to the net and is shown ready for assembly.

Figure 4 shows an eye formed at a free end of a band.

Figure 5 shows schematically a falling object guide (FOG) comprising four nets corresponding to the one in figure 1.

Figure 6 is an exploded view of the FOG in figure 5.

Figure 7 shows schematically an upper frame of the FOG in figure 5. Figure 7a and figure 7b show the collapsible and non-collapsible parts separated and assembled, respectively. Figure 7c and 7d show the collapsible part in a partly and fully collapsed configuration, respectively.

Figure 8 shows schematically a possible way of fastening a net to a profile ready to be assembled with the frame. Figure 8b is a side view of the net 1 in figure 8a taken along section A-A, and figure 8c is an enlarged view of detail B in figure 8b.

### DETAILED DESCRIPTION OF AN EMBODIMENT

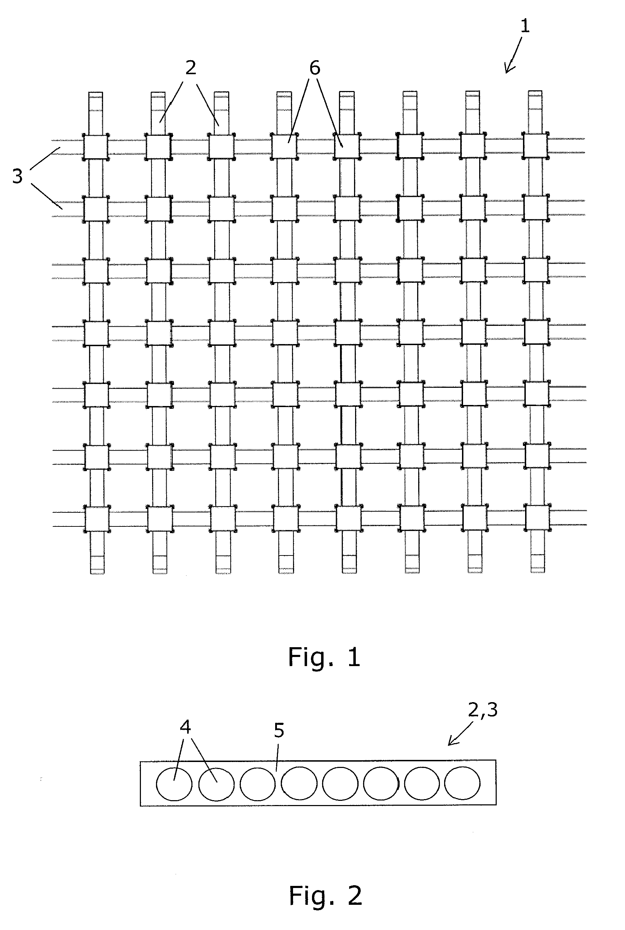

Figure 1 shows a net 1 made from first bands 2 and second bands 3 made from composite material of fibrous rope and a polymer coating. A rope typically comprises a number of strands which have been twisted together. However, a rope may also consist of only one strand. Here and in the following reference is only made to ropes, but other arrangements of strands of fibres are also covered by the scope of the invention. The first and second bands 2,3 are shown as intersecting at right angles, but for applications where high loading is expected in other mutual directions, it may be advantageous to use other arrangements of the bands 2,3. The first and second bands are typically identical, but they may also be different e.g. if a significantly larger load is to be applied in one direction than in another.

A band 2,3 may e.g. have a cross section as shown in figure 2. It comprises a number of ropes 4 enclosed by a polymer coating 5, and they are typically made by extrusion. Since the ropes are the load-carrying part of the bands, they should be made from a strong material preferably having high fracture toughness. Such a material is e.g. aramide fibres, but other fibres such as glass, carbon, polyamide, or polyethylene fibres are also possible alone or in combination with the aramide fibres. The choice of material is typically mainly related to the desired strength, but other parameters, such as stiffness, fracture elongation, or electrical conductivity may also be taken into account.

In the embodiment in figure 2, the band 2,3 comprises eight identical ropes 4 arranged equidistant across the width of the band 2,3, but the ropes 4 may also differ with respect to size, twisting or material type, and they need not be equidistantly arranged. Furthermore, nets 1 in which the bands 2,3 comprise only one rope 4 and have a substantially circular cross section are also covered by the scope of the invention although only flat bands are shown in the figures. The ropes 4 are typically made by twisting one or more strands of fibres, and the bands 2,3 are typically made by an extrusion process. However, other processes, such as pultrusion are also possible. The polymer may be any suitable material which both forms a sufficient bonding with the fibre material and meet the requirements during manufacturing and use.

Typical dimensions of the bands 2,3 are widths between 5 and 150 mm, thicknesses between 0.5 and 15 mm, and mesh sizes between 5 and 400 mm. By mesh size is preferably meant the distance between neighbouring bands 2,3.

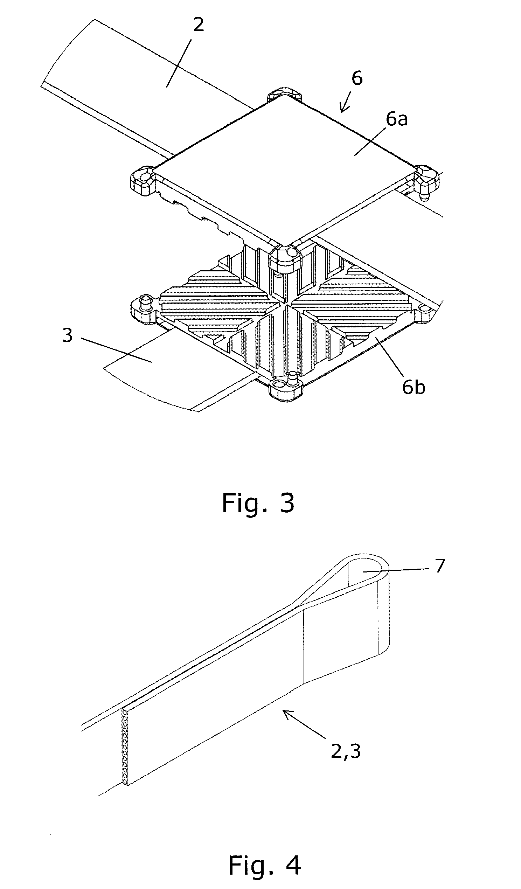

The first and second bands 2,3 may be connected at the intersections by a connection member 6 as shown schematically in figure 3 ready for assembly. Other designs fulfilling the same purpose are also covered by the scope of the present invention. A connecting member may comprise two connecting member parts 6a,6b. In an embodiment of the invention the first connecting member parts 6a are attached to the first bands 2, and the second connecting member parts 6b are attached to the second bands 3 before the net 1 is assembled. The net 1 can then be quickly assembled by joining the first and second connecting member parts 6a,6b, e.g. by a spring lock feature, in a releasable or un-releasable manner. Other joining methods are also possible, such as by gluing, screw connection, ultrasound welding or other suitable welding processes. If desired, the joining at the connecting points may be further secured by joining the first and second bands 2,3 themselves by any method known to a person skilled in the art. The connecting members 6 are typically made from plastic, but other materials, such as metal or composites, are also possible. They may be directly moulded to the bands 2,3 during manufacturing by injection moulding, or they may be attached later as separately manufactured connecting members.

It may alternatively (not shown) be more appropriate to use already assembled connecting members or connecting members manufactured as one piece. The connecting members can then be fastened to either the first or the second bands, so that the other bands are led through an opening in the connecting members when the net is made.

Another alternative is to mould separately manufactured connecting members that may be applied at any position along the tape, symmetrical as well as asymmetrically, in order to produce a net mesh that has rectangular openings and/or different sizes of bands connected to each other.

The connecting members 6 are typically arranged at regular intervals along the bands 2,3 as shown in figure 1. However, they can also be arranged at irregular intervals if desired. An optimal arrangement for a given application can be determined e.g. by experimentation or by simulation of expected load situations.

Figure 4 illustrates an eye 7 established at a free end of a band 2,3. The eye 7 established at the ends is used e.g. for fastening the net 1 to other structures. The eye 7 are in the figures disclosed as being formed by folding an end part of the band 2,3 and joining it to the remainder of the band2,3 , e.g. by any appropriate welding method, such as heat weld or ultrasound welding.

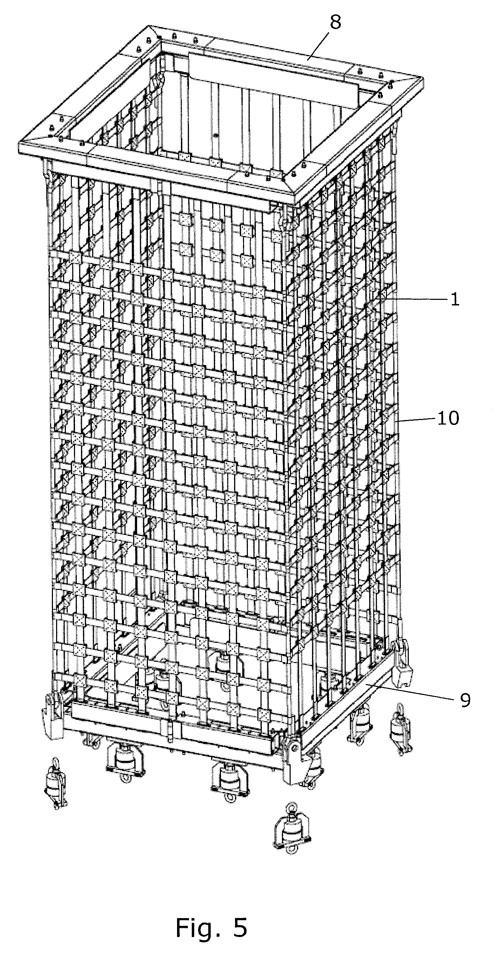

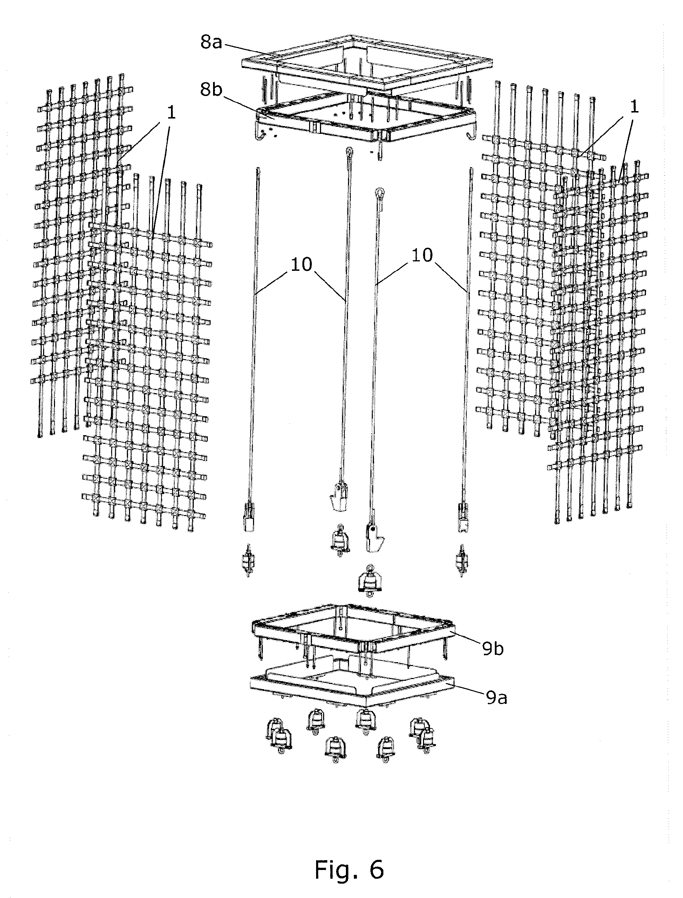

Figure 5 illustrates an application of nets as described above as a falling object guide (FOG) to be used e.g. during maintenance at oil or gas rigs. Typical dimensions are in the order of 3x3x6 m. The FOG comprises four plane nets 1 distended between an upper frame 8 and a lower frame 9 to form the sides of the FOG. The nets 1 are assembled by corner lines 10 as may be more clearly seen from the exploded view in figure 6. The corner lines 10 are passed through eyes 7 formed at the ends of the bands 2,3 and fastened to the frames 8,9 at each end. Hereby sharper corners of the structure can be obtained than what would be possible with one net only. However, an FOG having only one net could be more appropriate for FOGs with frames having a circular shape. The corner lines10 can e.g. be made from a polymer coated aramide rope.

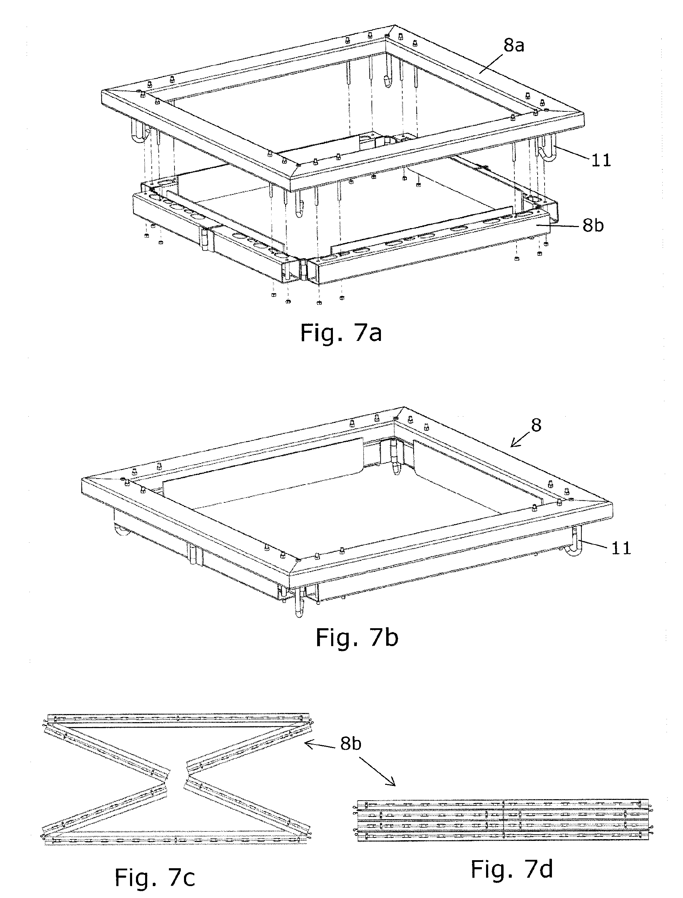

The frames comprise a collapsible frame part 8b and a non-collapsible frame part 8a. A possible design of an upper frame 8 is shown in figure 7. A corresponding arrangement may be used for the lower frame 9. The parts 8a,8b are connected to form a rigid frame 8 when the FOG is to be used. By folding the collapsible frame part 8b as shown in figure 7c, the FOG takes up less space during transportation and storage. The assembly with the non-collapsible part ensures a stable construction during use even when loaded. The frame 8 furthermore comprises means, shown as hooks 11 for fastening the corner lines 10 to the frame 8. To illustrate the advantageous use of a collapsible structure, a FOG with the dimensions as described above enclosing a space in the order of 54 m³, an has been tested to be foldable to a volume of less than 7 m³.

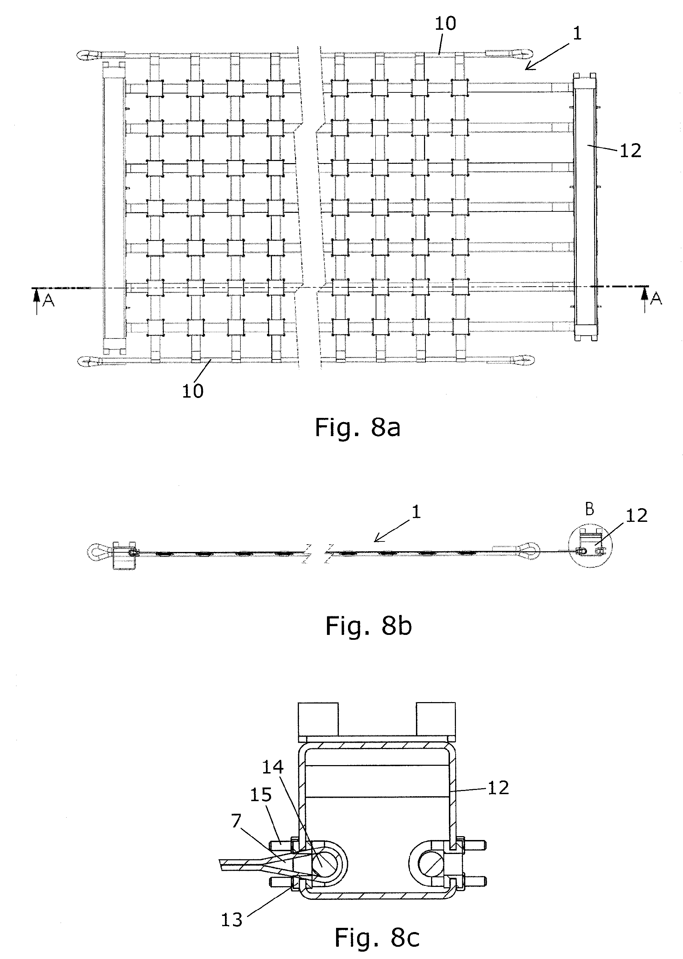

Figure 8 shows how the nets 1 can be fastened to the frames 8,9. They may either be fastened directly to the non-collapsible frame part 8b,9b, or they may be fastened to a separate beam 12, which is afterwards fastened to the frame. Figure 8b is a side view of the net 1 in figure 8a taken along section A-A, and figure 8c is an enlarged view of detail B in figure 8b. A protecting insert 13 made from rubber, PUR or other suitable material is placed in the beam 12 in order to prevent any damage to the bands when load is applied. The eye 7 is inserted in the insert 13 until the eye 7 is positioned inside the beam 12. When the eyes 7 of all of the relevant bands 2,3 have been inserted the beam 12, a rod 14 is then inserted through all the eyes 7. A horse shoe 15 is then fastened and the band 2,3 is locked into its position ready to be loaded in the structural member to which it is attached.

Although the present invention has been described in connection with the specified embodiments, it should not be construed as being in any way limited to the presented examples. E.g. a net may in some applications be used fastened directly to a structural part, such as a cargo compartment, without the need for a frame as described in connection with the FOG application being necessary. Other types of fastening means than a line inserted in eyes of the bands are also possible. Furthermore, plane nets may be established by connecting a number of nets end to end e.g. by use of lines or rods.

As mentioned, another possible application of a net or system according to the present invention is crash barriers, such as traffic dividers. This application resembles FOGs as described above except that the objects are vehicles moving in a substantially horizontal direction. This is just one example of a large number of other possible applications covered by the scope of the present invention. The actual overall design should be made to match an expected load situation and must also for some applications have to fulfil specified standards.

The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A net comprising first bands mutually spaced apart and second bands mutually spaced apart, the first and second bands being interconnected in a number of intersection points, wherein the first and second bands are composite materials comprising fibrous strands and a polymer coating at least partly covering the strands, said polymer coating forming a single enclosure of all the strands.

2. A net according to claim 1, wherein the strands are made from fibres having a larger tensile strength and a lower density than steel.

3. A net according to claim 1 or 2, wherein the first and second bands are interconnected by welding.

4. A net according to any of the preceding claims, wherein the first bands and second bands are interconnected by connecting members being fastened to at least some of the bands.

5. A net according to claim 4, wherein each connecting member comprises a first and a second connecting member part, each first part being pre-attached to one of the first bands and each second part being pre-attached to one of the second bands, so that the first bands and the second bands are interconnected when the first and second connection member parts are joined.

6. A net according to claim 4 or 5, wherein the connecting members are made from a plastic material and fastened to the bands by injection moulding.

7. A system for at least partly enclosing a space, the system comprising at least one net according to any of the preceding claims, said net constituting one structural member of the system forming an enclosure of the space, and said net being fastened to another structural member of the system so that the enclosure is formed from the other structural member and along the net.

8. A system according to claim 7, wherein the other structural member of the system is a frame provided at a location at one end of the net and to which frame the net is fastened, and wherein the frame comprises at least one collapsible first frame part and at least one non-collapsible second frame part, the two parts being connectable to form a rigid frame, said rigid frame being formed by locking the at least one collapsible first frame part into a non-collapsible state.

9. A system according to claim 8, comprising an upper rectangular frame and a lower rectangular frame and four substantially plane nets being suspended from each side of the upper rectangular frame, and said four nets being joined to neighbouring nets at corners of the system by means of longitudinal side edges of the plane nets being fastened to corner ropes, said corner ropes being fastened to the frames and extending between the frames.

10. A method of manufacturing a net, the method comprising the steps of
- providing first bands and second bands of composite material comprising fibrous strands and a polymer coating at least partly covering the strands,
- attaching connecting members to at least some of the bands at predefined locations along the bands, and
- interconnecting the first and second bands via the connecting members.

11. A method according to claim 10, wherein the connecting members comprise first connecting member parts each attached to a first band and second connecting member parts each attached to a second band, and wherein the interconnecting step comprises joining mating first and second connecting member parts.

12. A method according to claim 10 or 11, further comprising the step of forming an eye at at least one end of at least some of the bands, the eye being formed by folding a free end of the band and fastening the free end to a region of the remainder of the band.

13. A method of manufacturing a system according to claim 9, the method comprising the steps of
- providing four nets by a method according to claim 12,
- providing an upper and a lower rigid frame each comprising a collapsible first frame part and a non-collapsible second frame part,
- connecting the nets at the corners to form an enclosure by passing corner ropes through eyes of adjacent nets, and
- fastening the corner ropes to a frame at each end of the ropes.

14. Use of a system according to any of claims 7 to 9 as falling object enclosure of a space.

15. Use of a system according to claim 14 as falling object guide on oil or gas rigs.
